(19) Europäisches Patentamt
European Patent Office
Office européen des brevets

(11) Veröffentlichungsnummer: **0 654 503 A2**

# (12) EUROPÄISCHE PATENTANMELDUNG

(21) Anmeldenummer: **94117840.2**

(22) Anmeldetag: **11.11.94**

(51) Int. Cl.6: **C08L 67/02**, G03C 1/795, //(C08L67/02,55:02)

(30) Priorität: **24.11.93 DE 4339983**

(43) Veröffentlichungstag der Anmeldung: **24.05.95 Patentblatt 95/21**

(84) Benannte Vertragsstaaten: **BE DE FR GB NL**

(71) Anmelder: **Agfa-Gevaert AG**
**Kaiser-Wilhelm-Allee**
**D-51373 Leverkusen (DE)**

(72) Erfinder: **Sommer, Klaus, Dr. c/o Miles Inc.**
**Mobay Road**
**Pittsburgh,**
**PA 15205 (US)**
Erfinder: **Morbitzer, Leo, Dr.**
**Rungestrasse 50**
**D-51061 Köln (DE)**
Erfinder: **Bollens, Louis, Dipl.-Ing.**
**Puttestraat 175**
**B-3130 Begijnendijk (BE)**
Erfinder: **Stevens, Marc**
**Bergstraat 64**
**B-9180 Belsele (BE)**
Erfinder: **Plaetschke, Rüdiger, Dr.**
**Am Thelenhof 18**
**D-51377 Leverkusen (DE)**
Erfinder: **Pischtschan, Alfred, Dr.**
**Zur Eiche 33**
**D-51515 Kürten (DE)**

## (54) Geformter Kunststoffartikel.

(57) Ein geformter Artikel, insbesondere ein Träger für Bildinformationsschichten aus einer biaxial verstreckten Folie aus einem Polymergemisch aus 50 bis 97 Gew.-% eines linearen Polyesters und 3 bis 50 Gew.-% eines Styrol enthaltenden Polymers, welches im Styrol enthaltenden Teil nicht vernetzt ist, wobei sich die Prozentanteile auf die Summe aus Polyester und Styrol enthaltendes Polymer beziehen, zeichnet sich durch besonders hohe Deckkraft aus.

EP 0 654 503 A2

Die Erfindung betrifft einen geformten Artikel, insbesondere einen Träger für Bildinformationsschichten, beispielsweise eine Druckfolie für Thermosublimationsdruck und ähnliches, insbesondere aber ein fotografisches Trägermaterial auf der Basis einer biaxial verstreckten Polyesterfolie, das sich zur Herstellung fotografischer Aufsichtsmaterialien eignet.

Als Träger für fotografische Aufsichtsbilder werden üblicherweise mit Bariumsulfat beschichtetes Papier (Barytpapier) oder beidseitig mit Polyethylen beschichtetes Papier (PE-Papier) verwendet.

Barytpapier ist wegen der hohen Wasseraufnahme bei der Verarbeitung des belichteten Materials einer Schnellverarbeitung nicht zugänglich. PE-Papier ist verhältnismäßig teuer. Es hat daher nicht an Versuchen gefehlt, PE-Papier durch preisgünstigere Träger zu ersetzen. So ist bereits vorgeschlagen worden (US 4 187 113) als fotografischen Träger eine Polyesterfolie vorzusehen, wobei der Polyester mit einem mit dem Polyester unverträglichen Homo- oder Copolymer von Ethylen und Propylen gemischt, das Polymergemisch zu einer Folie verarbeitet und diese biaxial verstreckt wird.

Es ist bekannt, daß bei der Verstreckung in der Folie winzigste Hohlräume entstehen, die das eindringende Licht streuen und so eine ausreichend hohe Deckkraft gewährleisten sollen. Allerdings wird mit diesen Folien die mit einem PE-Papier erzielte Deckkraft nicht erreicht.

Weiterhin ist aus US 5 143 765, in der im übrigen der Stand der Technik ausführlich dargestellt ist, bekannt, Formkörper aus einer kontinuierlichen, orientierten Polymermatrix zu erzeugen, in der Mikrotröpfchen eines anderen Polymers dispergiert sind, die teilweise von einem Hohlraum umgeben sind. Die Formkörper, beispielsweise Filme für fotografische Aufzeichnungsmaterialien, zeichnen sich durch geringe Dichte und guten Weißgrad aus. Die Polymere der Mikrotröpfchen sind zu einem erheblichen Teil vernetzt und werden mit einem Gleitmittel umhüllt. Die Herstellung einer Dispersion der Mikrotröpfchen ist aufwendig. Die Formkörper werden hergestellt, indem eine Mischung des geschmolzenen Matrixpolymers und der vernetzten Mikrotröpfchen erzeugt, zu einem Formkörper verarbeitet und dieser durch Verstrecken orientiert wird.

Die Deckkraft solcher Filme ist noch nicht ausreichend.

Weiterhin ist das Material nicht ausreichend knitterfest.

Aufgabe der Erfindung war, einen geformten Artikel, insbesondere einen Träger für Bildinformationschichten, insbesondere ein fotografisches Trägermaterial auf der Basis eines Polyesters bereitzustellen, das in der Deckkraft verbessert ist, in dieser Eigenschaft wenigstens das Niveau eines PE-Papieres erreicht und sich durch gute Knitterfestigkeit auszeichnet.

Diese Aufgabe wird mit einem Polyesterpolymergemisch gelöst, bei dem das zugesetzte Polymer ein Styrol enthaltendes Polymer, z.B. ein Acrylnitrilbutadienstyrolpfropfcopolymerisat (ABS), ein Styrolacrylnitrilcopolymerisat (SAN) oder ein High Impact Polystyrol (HIPS), vorzugsweise aber ABS ist.

Gegenstand der Erfindung ist daher ein geformter Artikel, insbesondere ein Träger für Bildinformationsschichten, bevorzugt ein fotografisches Trägermaterial, das eine biaxial verstreckte Folie aus einem Polymergemisch aus 50 bis 97 Gew.-% eines linearen Polyesters und 3 bis 50 Gew.-% eines Styrol enthaltenden Polymers, welches im Styrol enthaltenden Teil nicht vernetzt ist, wobei sich die Prozentangaben auf die Summe von Polyester und Styrol enthaltendes Polymer beziehen.

Vorzugsweise machen der Polyester 77 bis 88 Gew.-% und das Styrol enthaltende Polymer 12 bis 23 Gew.-% aus.

Die lineare Polyesterkomponente des Films kann aus irgendeinem thermoplastischen filmbildenden Polyester bestehen, der durch Kondensation einer oder mehrerer Dicarbonsäuren oder niedriger Dialkylester davon, wie z.B. Terephthalsäure, Isophthalsäure, Phthalsäure, 2,5-, 2,6- oder 2,7-Naphthalindicarbonsäure, Bernsteinsäure, Sebacinsäure, Adipinsäure, Azelainsäure, Bibenzoesäure, Sulfoisophthalsäure und Hexahydroterephthalsäure oder Bis-p-carboxy-phenoxy-äthan, mit 1 oder mehreren Glycolen, wie Ethylenglycol, 1,3-Propandiol, 1,4-Butandiol, Neopentylglycol, Diethylenglykol, 1,4-Cyclohexandimethanol, Polyethylenglykol und polyethylensubstituierte Diole mit Etherseitengruppen mit und ohne endständige Sulfongruppen, erhalten werden kann Es können auch Mischpolyester, Copolyester und Polyesterblends verwendet werden kann. Der bevorzugte Polyester enthält wenigstens 80 Gew.-% Polyethylenterephthalat und kann bis zu 20 Gew.-% Polyethylen-iso-phthalat enthalten.

Das Styrol enthaltende Polymer enthält vorzugsweise 54 bis 63 Gew.-% Styrol und 12,5 bis 25 Gew.-% eines Elastomers, z.B. Polybutadien. Der zu 100 Gew.-% fehlende Teil ist Acrylnitril.

SAN-Harze, die erfindungsgemäß eingesetzt werden können, enthalten bevorzugt 5 bis 30 Gew.-% Acrylnitril.

HIPS ist ein Mehrphasensystem aus 88 - 94 Gew.-% Styrol ($M_w \sim 250.000$) und 6 - 12 Gew.-% Polybutadien.

Die bevorzugt zu verwendenden ABS-Kunststoffe sind Zweiphasenkunststoffe aus

1.) einem thermoplastischen Copolymerisat aus Styrol und Acrylnitril, in dem das Styrol teilweise durch α-Methylstyrol oder Methylmethacrylat ersetzt werden kann; dieses Copolymerisat, auch als SAN-Harz oder Harz-Matrix bezeichnet, bildet die äußere Phase;

2.) mindestens einem Pfroofpolymerisat, welches hergestellt worden ist durch Pfropfreaktion eines oder mehrerer der unter 1.) genannten Monomere auf ein Butadienhomo- oder -copolymerisat ("Pfropfgrundlage"). Dieses Pfropfpolymerisat ("Elastomerphase" oder "Pfropfkautschuk") bildet die disperse Phase im Matrixharz.

Die Herstellung der unter 1.) und 2.) genannten Polymerisate erfolgt nach bekannten Verfahren, z.B. Emulsions-, Lösungs-, Masse-, Suspensions- oder Fällungspolymerisation oder durch Kombination solcher Verfahren.

ABS-Polymerisate im Sinne der Erfindung enthalten 5 bis 100 Gew.-%, vorzugsweise 5 bis 80 Gew.-%, eines Pfropfpolymerisats und 95 bis 0 Gew.-%, vorzugsweise 95 bis 20 Gew.-%, eines thermoplastischen Copolymerharzes.

Pfropfpolymerisate im Sinne der Erfindung sind solche, in denen auf einen Kautschuk Styrol oder Mischungen von 95-50 Gew.-% Styrol und 5 bis 50 Gew.-% Acrylnitril, Methacrylnitril, Maleinsäureanhydrid, N-substituierte Maleinimide oder Mischungen daraus pfropfpolymerisiert sind, wobei sich die Prozentangaben auf die Summe aus Styrol (oder Styrolersatz) und Mischungspartner beziehen, und wobei Styrol teilweise durch α-Methylstyrol, kernsubstituiertes Styrol oder Methylmethacrylat ersetzt sein kann Geeignete Kautschuke sind praktisch alle Kautschuke mit Glasübergangstemperaturen ≦ 10 °C, z.B. Polybutadien, Styrol-Butadien-Copolymerisate, Acrylnitril-Butadien-Copolymerisate, Polyisopren, Alkylacrylatkautschuke wie z.B. Poly-n-butylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Alkylacrylatkautschuke können weiterhin kleinere Mengen, vorzugweise bis zu 5 Gew.-% (bezogen auf Kautschukgewicht) vernetztend wirkender ethylenisch ungesättigter Monomerer enthalten. Solche Vernetzer sind z.B. Alkylendiol-diacrylate und -methacrylate, Polyester-diacrylate und -methacrylate, Divinylbenzol, Trivinylbenzol, Triallylcyanurat, Allylacrylat und -methacrylat, Butadien und Isopren.

Pfropfgrundlage können auch Acrylatkautschuke mit Kern/Mantel-Struktur sein mit einem Kern aus vernetztem Dienkautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Weitere geeignete Kautschuke sind z.B. die sogenannten EPDM-Kautschuke (Polymerisate aus Ethylen, Propylen und einem nichtkonjugierten Dien wie z.B. Dicyclopentadien), EPM-Kautschuke (Ethylen/Propylen-Kautschuke) und Silikonkautschuke, die gegebenenfalls ebenfalls eine Kern/Schalen-Struktur aufweisen können. Bevorzugt sind Polybutadien und Alkylacrylatkautschuke.

Die Pfropfpolymerisate enthalten 10 bis 95 Gew.-%, insbesondere 20 bis 70 Gew.-%, Kautschuk und 90 bis 5 Gew.-%, insbesondere 80 bis 30 Gew.-% pfropfcopolymerisierte Monomere. Die Kautschuke liegen in diesen Pfropfcopolymerisaten in Form wenigstens partiell vernetzter Teilchen eines mittleren Teilchendurchmessers ($d_{50}$) von 0,05 bis 20,0 µm, bevorzugt von 0,1 bis 2,0 µm und besonders bevorzugt von 0,1 bis 0,8 µm, vor.

Derartige Pfropfcopolymerisate können durch radikalische Pfropfcopolymerisation von Monomeren aus der Reihe Styrol, α-Methylstyrol, kernsubstituiertem Styrol, (Meth)-Acrylnitril, Methylmethacrylat, Maleinsäureanhydrid, N-substituiertes Maleinimid in Gegenwart der zu pfropfenden Kautschuke hergestellt werden.

Die thermoplastischen Copolymerisate entstehen auch bei der Pfropfcopolymerisation als Nebenprodukte. Es ist üblich, neben den im Pfropfpolymerisat enthaltenen Copolymeren noch getrennt hergestellte Copolymere zuzumischen. Diese müssen nicht mit den in den Pfropfpolymeren vorliegenden ungepfropften Harzanteilen chemisch identisch sein.

Geeignete getrennt hergestellte Copolymere sind harzartig, thermoplastisch und kautschukfrei; es sind insbesondere Copolymere aus Styrol und/oder α-Methylstyrol mit Acrylnitril, gegebenenfalls in Mischung mit Methylmethacrylat.

Besonders bevorzugte Copolymerisate bestehen aus 20 bis 40 Gew.-% Acrylnitril und 80 bis 60 Gew.-% Styrol oder α-Methylstyrol. Solche Copolymerisate sind bekannt und lassen sich insbesondere durch radikalische Polymerisation, insbesondere durch Emulsions-, Suspensions-, Lösungs- oder Massepolymerisation herstellen. Die Copolymerisate besitzen vorzugsweise Molekulargewichte $\overline{M}w$ von 15000 bis $2 \cdot 10^5$.

Geeignete Beispiele für Komponenten sind die nachfolgend beschriebenen Pfropfcopolymerisate A) und B) sowie die Harze C) und D).

A) Pfropfkautschuke aus 50 Gew.-% Polybutadien mit einem mittleren Teilchendurchmesser ($d_{50}$) von 0,4 µm, auf das 36 Gew.-% Styrol und 14 Gew.-% Acrylnitril pfropfpolymerisiert wurden.

B) Pfropfkautschuk aus 50 Gew.-% Polybutadien mit einem mittleren Teilchendurchmesser ($d_{50}$) von 0,1 µm, auf das 36 Gew.-% Syrol und 14 Gew.-% Acrylnitril pfropfpolymerisiert wurden.

C) Copolymerisat aus 72 Gew.-% Styrol und 28 Gew.-% Acrylnitril (SAN) mit einem $\overline{M}w$ von ca. 115 000 mit U = $\overline{M}w/\overline{M}n$-1 ≦ 2 (molekulare Uneinheitlichkeit).

D) Copolymerisat aus 72 Gew.-% α-Methylstyrol und 28 Gew.-% Acrylnitril mit einem $\overline{M}w$ von ca. 77 000 mit U = $\overline{M}w/\overline{M}n$-1 ≦ 2 (molakulare Unheitlichkeit).

Geeignete Beispiele für erfindungsgemäß ebenfalls zu verwendende Pfropfcopolymerisate sind die nachfolgend beschriebenen Produkte ABS-1 und ABS-2.

ABS-1 ist ein hochwärmeformbeständiger ABS-Typ mit erhöhter Fließfähigkeit. Er besteht aus 26 Gew.-% eines Pfropfkautschuks aus 50 Gew.-% Polybutadien, 36 Gew.-% Styrol und 14 Gew.-% Acrylnitril und 74 Gew.-% einer Harzphase aus einem Copolymerisat aus 72 Gew.-% α-Methylstyrol und 28 Gew.-% Acrylnitril, von der 15 Gew.-% durch ein Copolymerisat aus 72 Gew.-% Styrol und 28 Gew.-% Acrylnitril ersetzt sind. Die Harzphase hat ein $\overline{M}w$ von ca. 77 000 und ein U = $\overline{M}w/\overline{M}n$-1 von ≦ 2.

ABS-2 besteht aus 37,5 Gew.-% des gleichen Pfropfkautschuks wie ABS-1. Die Harzphase ist ein Copolymerisat aus 72 Gew.% Styrol und 28 Gew.-% Acrylnitril mit $\overline{M}w$ ca. 115.000.

Das Polybutadien besteht zu gleichen Teilen aus Polybutadien mit $d_{50}$ von etwa 400 nm und Polybutadien mit $d_{50}$ von etwa 100 nm.

Beide ABS-Typen enthalten übliche Verarbeitungshilfsmittel und Antioxidantien.

HIPS ist eine Mischung aus 88 bis 94 Gew.-% Polystyrol ($\overline{M}w$ ~ 250.000) und 12 bis 6 Gew.-% Polybutadien.

Vorzugsweise hat das Pfropfcopolymerisat folgende Eigenschaften:
Gelanteil der Pfropfgrundlage ≧ 70 %, vorzugsweise ≧ 80 % (in Toluol gemessen); Pfropfgrad G 0,15 bis 0,55 und mittlerer Teilchendurchmesser $d_{50}$ 0,07 bis 0,6 µm, vorzugsweise 0,1 bis 0,4 µm.

Die Pfropfgrundlage kann neben Butadienresten bis zu 30 Gew.-% Reste anderer α,β-ethylenisch ungesättigter Monomerer, wie z.B. Styrol, Acrylnitril, Ester der Acryl- oder Methacrylsäure mit 1-4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren bekanntlich nicht vollständig auf die Pfropfgrundlage aufpfropfen, werden erfindungsgemäß unter Pfropfpolymerisaten auch solche Produkte verstanden, die neben den eigentlichen Pfropfpolymeren auch Homo-und Copolymerisate der eingesetzten Pfropfmonomeren enthalten. Der Pfropfgrad G bezeichnet das Gewichtsverhältnis von aufgepfropftem Styrol-Acrylnitril: Pfropfgrundlage und ist dimensionslos.

Der mittlere Teilchendurchmesser $d_{50}$ ist der Durchmesser, oberhalb und unterhalb dessen jeweils 50 Gew.-% der Teilchen liegen.

Der mittlere Teilchendurchmesser kann mittels Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (G. Kämpf, H. Schuster, Angew. Makromolekulare Chemie 14 (1970), 111-129) bestimmt werden.

Die Pfropfpolymerisate können nach an sich bekannten Methoden, z.B. durch Emulsionspolymerisation oder Latex-Suspensionsverfahren, mit Hilfe von Radikal-bildenden Polymerisationsinitiatoren in einem Polybutadien- beziehungsweise Butadien-Copolymerisat-Latex hergestellt werden.

Die Verfahren zur Herstellung von ABS-Pfropfpolymerisaten sind bekannt.

Die Herstellung der erfindungsgemäßen Mischung aus Polyester und Styrol enthaltendem Polymer kann in den üblichen Mischaggregaten wie Walzen, Kneter, Ein-und Mehrwellenextruder erfolgen. Besonders geeignet sind Doppelwellenextruder und Kneter.

Die Mischungen können auf den genannten Mischaggregaten hergestellt werden, indem die beiden Komponenten gemeinsam aufgeschmolzen und homogenisiert werden oder indem das Styrolpolymerisat in die Schmelze des Polyesters eingearbeitet wird.

Die Temperatur bei der Herstellung der Mischungen sollte mindestens 10 °C oberhalb der Mischschmelzpunkte des Polyesters und unterhalb 350 °C, vorzugsweise zwischen 245 und 280 °C liegen.

Das Styrolpolymerisat ist mit der Polyesterkomponente unmischbar und liegt in dem erfindungsgemäßen verwendeten Bereich von Mischungsverhältnissen als disperse Phase vor, Der Polyester bildet die kontinuierliche Phase.

Ist der geformte Artikel ein Film, z.B. ein Träger für Bildinformationsschichten, der durch Extrusion der Polymermischung erzeugt wird, geht man wie folgt vor:
Die Extrusion, das Abschrecken und das Verstrecken des Films kann durch irgendein in der Technik bekanntes Verfahren zur Herstellung eines orientierten Polyesterfilms ausgeführt werden, beispielsweise durch ein Flachfilmverfahren oder durch ein Blas- oder Schlauchverfahren. Das Flachfilmverfahren wird zur

Herstellung von erfindungsgemäßen Filmen bevorzugt. Bei ihm wird das Gemisch durch eine Schlitzdüse extrudiert; die extrudierte Bahn wird auf einer gekühlten Gießtrommel abgeschreckt, so daß die Polyesterkomponente des Films in einen amorphen Zustand abgeschreckt wird. Der abgeschreckte Film wird dann biaxial orientiert, und zwar durch Verstrecken in senkrecht zueinander verlaufenden Richtungen bei einer Temperatur über der Glas/Gummi-Übergangstemperatur des Polyesters. Im allgemeinen wird der Film zunächst in einer Richtung und dann in der zweiten Richtung verstreckt, obwohl das Verstrecken gegebenenfalls gleichzeitig in beiden Richtungen durchgeführt werden kann. Bei einem typischen Verfahren wird der Film zunächst in der Extrusionsrichtung über einer Gruppe von rotierenden Rollen oder zwischen einem Paar von Quetschrollen und anschließend auf einer Querreckanlage in Querrichtung hierzu verstreckt. Der Film kann in jeder Richtung auf das 2- bis 5-fache, vorzugsweise 2,8- bis 3,5-fache der ursprünglichen Abmessungen verstreckt werden. Bei mehrschichtigen Filmen können Schichten auch nach dem Längs- und vor dem Querverstrecken aufgebracht werden.

Von wesentlichen Einfluß bei der Verstreckung ist die Längsverstrecktemperatur, mit deren Variation die gravimetrische Dichte (in Unterscheidung zur optischen Dichte) in einem weiten Bereich beeinflußt werden kann.

Vorteilhafterweise wendet man eine Querverstrecktemperatur unterhalb der Glastemperatur des Styrol-enthaltenden Polymers, z.B. des Styrol-Acrylnitrilharzes an, wodurch man trotz erheblicher Erniedrigung der gravimetrischen Dichte (die eine erhebliche Materialersparnis ermöglicht) sehr gute mechanische Eigenschaften erzielt (Knitterfestigkeit).

Die Längsverstrecktemperatur wird auf einen Wert zwischen $T_g$ und $T_g + 10$ K eingestellt, wodurch eine möglichst große Verstreckspannung erzeugt wird.

Nachdem der Film querverstreckt worden ist, wird er durch Erhitzen auf eine Temperatur thermofixiert, die ausreicht, den Polyester auszukristallisieren, während eine Kontraktion des Films in beiden Verstreckrichtungen verhindert wird.

Die Thermofixiertemperatur sollte nicht über 230 °C, vorzugsweise nicht über 200 °C liegen.

Das erfindungsgemäße Trägermaterial kann weitere Zusätze enthalten, z.B. Pigmente, insbesondere $TiO_2$, $BaSO_4$, $CaCO_3$, Weißtöner oder Blaufarbstoffe, die die Deckkraft weiter erhöhen und die Schärfe verbessern, insbesondere werden 0,5 bis 10 Gew.-%, bezogen auf das Gesamtgewicht des eingesetzten Bestandteil, vorzugsweise 2 bis 10, vorzugsweise 3,5 bis 6,5 Gew.-% $TiO_2$-Pigment, vorzugsweise vom Anatas-Typ zugesetzt.

In einer bevorzugten Ausführungsform der Erfindung wird auf wenigstens eine Seite des extrudierten Filmes nach der Extrusion oder im Sinne einer Koextrusion eine Schicht aus Polyester, insbesondere dem gleichen Polyester, aufgebracht, der kein styrolenthaltendes Copolymer, das im Styrol enthaltenden Teil nicht vernetzt ist, oder eine Mischung von Polyester mit Zusätzen enthält.

Während die Dicke des Films ohne zusätzliche Schicht im verstreckten Zustand insbesondere 160 bis 190 µm beträgt, ist die Dicke der zusätzlichen Schicht vorzugsweise 1 bis 50 µm, insbesondere 5 bis 20 µm. Die zusätzliche Schicht kann bis 25 Gew.-% aus einem Weißpigment, z,B, Titandioxid vom Rutil oder insbesondere Anatas-Typ bestehen.

Der erfindungsgemäße Träger zeigt eine bemerkenswerte papierähnliche Textur und ist deshalb als Papierersatz geeignet, und zwar insbesondere als Grundlage für photographische Papiere, das heißt als Ersatz für PE-Papier.

Der erfindungsgemäße Träger eignet sich weiter für trockenbildgebende Verfahren, Thermosublimationsdruck, Delaminationsverfahren, Elektrophotographie, Ink-Jet-Verfahren.

Ein weiterer Gegenstand der Erfindung ist daher ein fotografisches Material mit einem Träger und wenigstens einer darauf aufgebrachten Silberhalogenidemulsionsschicht, dadurch gekennzeichnet, daß als Träger das erfindungsgemäße Trägermaterial verwendet wird.

Das fotografische Material kann ein Schwarz-Weiß- oder ein Farbaufsichtsmaterial sein. Vorzugsweise handelt es sich um ein farbfotografisches Material.

Die farbfotografischen Materialien enthalten üblicherweise mindestens je eine rotempfindliche, grünempfindliche und blauempfindliche Silberhalogenidemulsionsschicht sowie gegebenenfalls Zwischenschichten und Schutzschichten.

Wesentliche Bestandteile der fotografischen Emulsionsschichten sind Bindemittel, Silberhalogenidkörnchen und Farbkuppler.

Als Bindemittel wird vorzugsweise Gelatine verwendet. Diese kann jedoch ganz oder teilweise durch andere synthetische, halbsynthetische oder auch natürlich vorkommende Polymere ersetzt werdend Synthetische Gelatineersatzstoffe sind beispielsweise Polyvinylalkohol, Poly-N-vinylpyrrolidon, Polyacrylamide, Polyacrylsäure und deren Derivate, insbesondere deren Mischpolymerisate. Natürlich vorkommende Gelatineersatzstoffe sind beispielsweise andere Proteine wie Albumin oder Casein, Cellulose, Zucker, Stärke oder

Alginate. Halbsynthetische Gelatineersatzstoffe sind in der Regel modifizierte Naturprodukte. Cellulosederivate wie Hydroxyalkylcellulose, Carboxymethylcellulose und Phthalylcellulose sowie Gelatinederivate, die durch Umsetzung mit Alkylierungs- oder Acylierungsmitteln oder durch Aufpfropfung von polymerisierbaren Monomeren erhalten worden sind, sind Beispiele hierfür.

Die Bindemittel sollen über eine ausreichende Menge an funktionellen Gruppen verfügen, so daß durch Umsetzung mit geeigneten Härtungsmitteln genügend widerstandsfähige Schichten erzeugt werden können, Solche funktionellen Gruppen sind insbesondere Aminogruppen, aber auch Carboxylgruppen, Hydroxylgruppen und aktive Methylengruppen.

Die vorzugsweise verwendete Gelatine kann durch sauren oder alkalischen Aufschluß erhalten sein, Es kann auch oxidierte Gelatine verwendet werden, Die Herstellung solcher Gelatinen wird beispielsweise in The Science and Technology of Gelatine, herausgegeben von A.G. Ward und A. Courts, Academic Press 1977, Seite 295 ff beschrieben. Die jeweils eingesetzte Gelatine soll einen möglichst geringen Gehalt an fotografisch aktiven Verunreinigungen enthalten (Inertgelatine). Gelatinen mit hoher Viskosität und niedriger Quellung sind besonders vorteilhaft,

Das als lichtempfindlicher Bestandteil in dem fotografischen Material befindliche Silberhalogenid kann als Halogenid Chlorid, Bromid oder Iodid bzw. Mischungen davon enthalten, Beispielsweise kann der Halogenidanteil wenigstens einer Schicht zu 0 bis 15 mol-% aus Iodid, zu 0 bis 100 mol-% aus Chlorid und zu 0 bis 100 mol-% aus Bromid bestehen. Im Falle von Farbnegativ- und Farbumkehrfilmen werden üblicherweise Silberbromidiodidemulsionen, im Falle von Farbnegativ- und Farbumkehrpapier üblicherweise Silberchloridbromidemulsionen mit hohem Chloridanteil bis zu reinen Silberchloridemulsionen verwendet. Es kann sich um überwiegend kompakte Kristalle handeln, die z.B. regulär kubisch oder oktaedrisch sind oder Übergangsformen aufweisen können. Vorzugsweise können aber auch plättchenförmige Kristalle vorliegen, deren durchschnittliches Verhältnis von Durchmesser zu Dicke bevorzugt wenigstens 5:1 ist, wobei der Durchmesser eines Kornes definiert ist als der Durchmesser eines Kreises mit einem Kreisinhalt entsprechend der projizierten Fläche des Kornes. Die Schichten können aber auch tafelförmige Silberhalogenidkristalle aufweisen, bei denen das Verhältnis von Durchmesser zu Dicke wesentlich größer als 5:1 ist, z.B. 12:1 bis 30:1.

Die Silberhalogenidkörner können auch einen mehrfach geschichteten Kornaufbau aufweisen, im einfachsten Fall mit einem inneren und einem äußeren Kornbereich (core/shell), wobei die Halogenidzusammensetzung und/oder sonstige Modifizierungen, wie z.B. Dotierungen der einzelnen Kornbereiche unterschiedlich sind. Die mittlere Korngröße der Emulsionen liegt vorzugsweise zwischen 0,2 µm und 2,0 µm, die Korngrößenverteilung kann sowohl homo- als auch heterodispers sein. Homodisperse Korngrößenverteilung bedeutet, daß 95 % der Körner nicht mehr als ± 30% von der mittleren Korngröße abweichen, Die Emulsionen können neben dem Silberhalogenid auch organische Silbersalze enthalten, z.B. Silberbenztriazolat oder Silberbehenat.

Es können zwei oder mehrere Arten von Silberhalogenidemulsionen, die getrennt hergestellt werden, als Mischung verwendet werden.

Die Silberhalogenidemulsion wird im allgemeinen einer chemischen Sensibilisierung unter definierten Bedingungen - pH, pAg, Temperatur, Gelatine-, Silberhalogenid- und Sensibilisatorkonzentration - bis zum Erreichen des Empfindlichkeits- und Schleieroptimums unterworfen. Die Verfahrensweise ist z.B. bei H. Frieser "Die Grundlagen der Photographischen Prozesse mit Silberhalogeniden" Seite 675-734, Akademische Verlagsgesellschaft (1968) beschrieben.

Dabei kann die chemische Sensibilisierung unter Zusatz von Verbindungen von Schwefel, Selen, Tellur und/oder Verbindungen der Metalle der VIII. Nebengruppe des Periodensystems (z.B. Gold, Platin, Palladium, Iridium) erfolgen, weiterhin können Thiocyanatverbindungen, oberflächenaktive Verbindungen, wie Thioether, heterocyclische Stickstoffverbindungen (z.B. Imidazole, Azaindene) oder auch spektrale Sensibilisatoren (beschrieben z.B. bei F. Hamer "The Cyanine Dyes and Related Compounds", 1964, bzw. Ullmanns Encyclopädie der technischen Chemie, 4. Auflage, Bd. 18, S. 431 ff. und Research Disclosure 17643 (Dez. 1978), Kapitel III) zugegeben werden. Ersatzweise oder zusätzlich kann eine Reduktionssensibilisierung unter Zugabe von Reduktionsmitteln (Zinn-II-Salze, Amine, Hydrazinderivate, Aminoborane, Silane, Formamidinsulfinsäure) durch Wasserstoff, durch niedrigen pAg (z.B. kleiner 5) und/oder hohen pH (z.B. über 8) durchgeführt werden,

Die fotografischen Emulsionen können Verbindungen zur Verhinderung der Schleierbildung oder zur Stabilisierung der fotografischen Funktion während der Produktion, der Lagerung oder der fotografischen Verarbeitung enthalten,

Besonders geeignet sind Azaindene, vorzugsweise Tetra- und Pentaazaindene, insbesondere solche, die mit Hydroxyl- oder Aminogruppen substituiert sind. Derartige Verbindungen sind z.B. von Birr, Z. Wiss, Phot. 47 (1952), S. 2-58 beschrieben worden. Weiter können als Antischleiermittel Salze von Metallen wie

Quecksilber oder Cadmium, aromatische Sulfon- oder Sulfinsäuren wie Benzolsulfinsäure, oder stickstoffhaltige Heterocyclen wie Nitrobenzimidazol, Nitroindazol, gegebenenfalls substituierte Benztriazole oder Benzthiazoliumsalze eingesetzt werden. Besonders geeignet sind Mercaptogruppen enthaltende Heterocyclen, z.B. Mercaptobenzthiazole, Mercaptobenzimidazole, Mercaptotetrazole, Mercaptothiadiazole, Mercaptopyrimidine, wobei diese Mercaptoazole auch eine wasserlöslichmachende Gruppe, z.B. eine Carboxylgruppe oder Sulfogruppe, enthalten können. Weitere geeignete Verbindungen sind in Research Disclosure 17643 (Dez. 1978), Kapitel VI, veröffentlicht.

Die Stabilisatoren können den Silberhalogenidemulsionen vor, während oder nach deren Reifung zugesetzt werden. Selbstverständlich kann man die Verbindungen auch anderen fotografischen Schichten, die einer Halogensilberschicht zugeordnet sind, zusetzen.

Es können auch Mischungen aus zwei oder mehreren der genannten Verbindungen eingesetzt werden.

Die fotografischen Emulsionsschichten oder andere hydrophile Kolloidschichten des erfindungsgemäß hergestellten lichtempfindlichen Materials können oberflächenaktive Mittel für verschiedene Zwecke enthalten, wie Überzugshilfen, zur Verhinderung der elektrischen Aufladung, zur Verbesserung der Gleiteigenschaften, zum Emulgieren der Dispersion, zur Verhinderung der Adhäsion und zur Verbesserung der fotografischen Charakteristika (z.B. Entwicklungsbeschleunigung, hoher Kontrast, Sensibilisierung usw.). Neben natürlichen oberflächenaktiven Verbindungen, z.B. Saponin, finden hauptsächlich synthetische oberflächenaktive Verbindungen (Tenside) Verwendung: nicht-ionische Tenside, z.B. Alkylenoxidverbindungen, Glycerinverbindungen oder Glycidolverbindungen, kationische Tenside, z.B. höhere Alkylamine, quartäre Ammoniumsalze, Pyridinverbindungen und andere heterocyclische Verbindungen, Sulfoniumverbindungen oder Phosphoniumverbindungen, anionische Tenside, enthaltend eine Sauregruppe, z.B. Carbonsäure-, Sulfonsäure-, eine Phosphorsäure-, Schwefelsäureester- oder Phosphorsäureestergruppe, ampholytische Tenside, z.B. Aminosäure- und Aminosulfonsäureverbindungen sowie Schwefel- oder Phosphorsäureester eines Aminoalkohols.

Die fotografischen Emulsionen können unter Verwendung von Methinfarbstoffen oder anderen Farbstoffen spektral sensibilisiert werden. Besonders geeignete Farbstoffe sind Cyaninfarbstoffe, Merocyaninfarbstoffe und komplexe Merocyaninfarbstoffe.

Eine Übersicht über die als Spektralsensibilisatoren geeigneten Polymethinfarbstoffe, deren geeignete Kombinationen und supersensibilisierend wirkenden Kombinationen enthält Research Disclosure 17643 (Dez. 1978), Kapitel IV.

Insbesondere sind die folgenden Farbstoffe - geordnet nach Spektralgebieten - geeignet:

1. als Rotsensibilisatoren

9-Ethylcarbocyanine mit Benzthiazol, Benzselenazol oder Naphthothiazol als basische Endgruppen, die in 5- und/oder 6-Stellung durch Halogen, Methyl, Methoxy, Carbalkoxy, Aryl substituiert sein können sowie 9-Ethyl-naphthoxathia- bzw. -selencarbocyanine und 9-Ethyl-naphthothiaoxa- bzw. -benzimidazocarbocyanine, vorausgesetzt, daß die Farbstoffe mindestens eine Sulfoalkylgruppe am heterocyclischen Stickstoff tragen.

2. als Grünsensibilisatoren

9-Ethylcarbocyanine mit Benzoxazol, Naphthoxazol oder einem Benzoxazol und einem Benzthiazol als basische Endgruppen sowie Benzimidazocarbocyanine, die ebenfalls weiter substituiert sein können und ebenfalls mindestens eine Sulfoalkylgruppe am heterocyclischen Stickstoff enthalten müssen.

3. als Blausensibilisatoren

symmetrische oder asymmetrische Benzimidazo-, Oxa-, Thia- oder Selenacyanine mit mindestens einer Sulfoalkylgruppe am heterocyclischen Stickstoff und gegebenenfalls weiteren Substituenten am aromatischen Kern, sowie Apomerocyanine mit einer Rhodaningruppe.

Auf Sensibilisatoren kann verzichtet werden, wenn für einen bestimmten Spektralbereich die Eigenempfindlichkeit des Silberhalogenids ausreichend ist, beispielsweise die Blauempfindlichkeit von Silberbromiden.

Den unterschiedlich sensibilisierten Emulsionsschichten werden nicht diffundierende monomere oder polymere Farbkuppler zugeordnet, die sich in der gleichen Schicht oder in einer dazu benachbarten Schicht befinden können.

Gewöhnlich werden den rotempfindlichen Schichten Blaugrünkuppler, den grünempfindlichen Schichten Purpurkuppler und den blauempfindlichen Schichten Gelbkuppler zugeordnet.

Farbkuppler zur Erzeugung des blaugrünen Teilfarbenbildes sind in der Regel Kuppler vom Phenol- oder $\alpha$-Naphtholtyp.

Farbkuppler zur Erzeugung des gelben Teilfarbenbildes sind in der Regel Kuppler mit einer offenkettigen Ketomethylengruppierung, insbesondere Kuppler vom Typ des $\alpha$-Acylacetamids; geeignete Beispiele hierfür sind $\alpha$-Benzoylacetanilidkuppler und $\alpha$-Pivaloylacetanilidkuppler.

Farbkuppler zur Erzeugung des purpurnen Teilfarbenbildes sind üblicherweise Kuppler vom Pyrazolontyp oder vom Pyrazoloazol-, insbesondere vom Pyrazolotriazoltyp.

Bei den Farbkupplern kann es sich um 4-Äquivalentkuppler, aber auch um 2-Äquivalentkuppler handeln. Letztere leiten sich von den 4-Äquivalentkupplern dadurch ab, daß sie in der Kupplungsstelle einen Substituenten enthalten, der bei der Kupplung abgespalten wird. Zu den 2-Äquivalentkupplern sind solche zu rechnen, die farblos sind, als auch solche, die eine intensive Eigenfarbe aufweisen, die bei der Farbkupplung verschwindet bzw. durch die Farbe des erzeugten Bildfarbstoffes ersetzt wird (Maskenkuppler), und die Weißkuppler, die bei Reaktion mit Farbentwickleroxidationsprodukten im wesentlichen farblose Produkte ergeben. Zu den 2-Äquivalentkupplern sind ferner solche Kuppler zu rechnen, die in der Kupplungsstelle einen abspaltbaren Rest enthalten, der bei Reaktion mit Farbentwickleroxidationsprodukten in Freiheit gesetzt wird und dabei entweder direkt oder nachdem aus dem primär abgespaltenen Rest eine oder mehrere weitere Gruppen abgespalten worden sind (z.B. DE-A-27 03 145, DE-A-28 55 697, DE-A-31 05 026, DE-A-33 19 428), eine bestimmte erwünschte fotografische Wirksamkeit entfaltet, z.B. als Entwicklungsinhibitor oder -accelerator. Beispiele für solche 2-Äquivalentkuppler sind die bekannten DIR-Kuppler wie auch DAR-bzw. FAR-Kuppler.

Das Material kann weiterhin von Kupplern verschiedene Verbindungen enthalten, die beispielsweise einen Entwicklungsinhibitor, einen Entwicklungsbeschleuniger, einen Bleichbeschleuniger, einen Entwickler, ein Silberhalogenidlösungsmittel, ein Schleiermittel oder ein Antischleiermittel in Freiheit setzen können, beispielsweise sogenannte DIR-Hydrochinone und andere Verbindungen, wie sie beispielsweise in US-A-4 636 546, 4 345 024, 4 684 604 und in DE-A-31 45 640, 25 15 213, 24 47 079 und in EP-A-198 438 beschrieben sind. Diese Verbindungen erfüllen die gleiche Funktion wie die DIR-, DAR- oder FAR-Kuppler, außer daß sie keine Kupplungsprodukte bilden.

Hochmolekulare Farbkuppler sind beispielsweise in DE-C-1 297 417, DE-A-24 07 569, DE-A-31 48 125, DE-A-32 17 200, DE-A-33 20 079, DE-A-33 24 932, DE-A-33 31 743, DE-A-33 40 376, EP-A-27 284, US-A-4 080 211 beschrieben. Die hochmolekularen Farbkuppler werden in der Regel durch Polymerisation von ethylenisch ungesättigten monomeren Farbkupplern hergestellt. Sie können aber auch durch Polyaddition oder Polykondensation erhalten werden.

Die Einarbeitung der Kuppler oder anderer Verbindungen in Silberhalogenidemulsionsschichten kann in der Weise erfolgen, daß zunächst von der betreffenden Verbindung eine Lösung, eine Dispersion oder eine Emulsion hergestellt und dann der Gießlösung für die betreffende Schicht zugefügt wird. Die Auswahl des geeigneten Lösungs- oder Dispersionsmittels hängt von der jeweiligen Löslichkeit der Verbindung ab.

Methoden zum Einbringen von in Wasser im wesentlichen unlöslichen Verbindungen durch Mahlverfahren sind beispielsweise in DE-A-26 09 741 und DE-A-26 09 742 beschrieben.

Hydrophobe Verbindungen können auch unter Verwendung von hochsiedenden Lösungsmitteln, sogenannten Ölbildnern, in die Gießlösung eingebracht werden. Entsprechende Methoden sind beispielsweise in US-A-2 322 027, US-A-2 801 170, US-A-2 801 171 und EP-A-O 043 037 beschrieben.

Anstelle der hochsiedenden Lösungsmitteln können Oligomere oder Polymere, sogenannte polymere Ölbildner Verwendung finden.

Die Verbindungen können auch in Form beladener Latices in die Gießlösung eingebracht werden. Verwiesen wird beispielsweise auf DE-A-25 41 230, DE-A-25 41 274, DE-A-28 35 856, EP-A-O 014 921, EP-A-0 069 671, EP-A-O 130 115, US-A-4 291 113.

Die diffusionsfeste Einlagerung anionischer wasserlöslicher Verbindungen (z.B. von Farbstoffen) kann auch mit Hilfe von kationischen Polymeren, sogenannten Beizenpolymeren erfolgen.

Geeignete Ölbildner sind z.B. Phthalsäurealkylester, Phosphonsäureester, Phosphorsäureester, Citronensäureester, Benzoesäureester, Amide, Fettsäureester, Trimesinsäureester, Alkohole, Phenole, Anilinderivate und Kohlenwasserstoffe.

Beispiele für geeignete Ölbildner sind Dibutylphthalat, Dicyclohexylphthalat, Di-2-ethylhexylphthalat, Decylphthalat, Triphenylphosphat, Tricresylphosphat, 2-Ethylhexyldiphenylphosphat, Tricyclohexylphosphat, Tri-2-ethylhexylphosphat, Tridecylphosphat, Tributoxyethylphosphat, Trichlorpropylphosphat, Di-2-ethylhexylphenylphosphat, 2-Ethylhexylbenzoat, Dodecylbenzoat, 2-Ethylhexyl-p-hydroxybenzoat, Diethyldodecanamid, N-Tetradecylpyrrolidon, Isostearylalkohol, 2,4-Di-t-amylphenol, Dioctylacelat, Glycerintributyrat, Isostearyllactat, Trioctylcitrat, N,N-Dibutyl-2-butoxy-5-t-octylanilin, Paraffin, Dodecylbenzol und Diisopropylnaphthalin.

Jede der unterschiedlich sensibilisierten, lichtempfindlichen Schichten kann aus einer einzigen Schicht bestehen oder auch zwei oder mehr Silberhalogenidemulsionsteilschichten umfassen (DE-C-1 121 470). Dabei sind rotempfindliche Silberhalogenidemulsionsschichten dem
Schichtträger häufig näher angeordnet als grünempfindliche Silberhalogenidemulsionsschichten und diese wiederum näher als blauempfindliche, wobei sich im allgemeinen zwischen grünempfindlichen Schichten

und blauempfindlichen Schichten eine nicht lichtempfindliche gelbe Filterschicht befindet.

Bei geeignet geringer Eigenempfindlichkeit der grün-bzw. rotempfindlichen Schichten kann man unter Verzicht auf die Gelbfilterschicht andere Schichtanordnungen wählen, bei denen auf den Träger z.B. die blauempfindlichen, dann die rotempfindlichen und schließlich die grünempfindlichen Schichten folgen.

Die in der Regel zwischen Schichten unterschiedlicher Spektralempfindlichkeit angeordneten nicht lichtempfindlichen Zwischenschichten können Mittel enthalten, die eine unerwünschte Diffusion von Entwickleroxidationsprodukten aus einer lichtempfindlichen in eine andere lichtempfindliche Schicht mit unterschiedlicher spektraler Sensibilisierung verhindern

Liegen mehrere Teilschichten gleicher spektraler Sensibilisierung vor, so können sich diese hinsichtlich ihrer Zusammensetzung, insbesondere was Art und Menge der Silberhalogenidkörnchen betrifft unterscheiden. Im allgemeinen wird die Teilschicht mit höherer Empfindlichkeit von Träger entfernter angeordnet sein als die Teilschicht mit geringerer Empfindlichkeit. Teilschichten gleicher spektraler Sensibilisierung können zueinander benachbart oder durch andere Schichten, z.B. durch Schichten anderer spektraler Sensibilisierung getrennt sein. So können z.B. alle hochempfindlichen und alle niedrigempfindlichen Schichten jeweils zu einem Schichtpaket zusammengefaßt sein (DE-A-19 58 709, DE-A-25 30 645, DE-A-26 22 922).

Das fotografische Material kann weiterhin UV-Licht absorbierende Verbindungen, Weißtöner, Abstandshalter, Filterfarbstoffe, Formalinfänger, Lichtschutzmittel, Antioxidantien, $D_{Min}$-Farbstoffe, Zusätze zur Verbesserung der Farbstoff-, Kuppler- und Weißenstabilisierung sowie zur Verringerung des Farbschleiers, Weichmacher (Latices), Biocide und anderes enthalten.

UV-Licht absorbierende Verbindungen sollen einerseits die Bildfarbstoffe vor dem Ausbleichen durch UV-reiches Tageslicht schützen und andererseits als Filterfarbstoffe das UV-Licht im Tageslicht bei der Belichtung absorbieren und so die Farbwiedergabe eines Films verbessern. Üblicherweise werden für die beiden Aufgaben Verbindungen unterschiedlicher Struktur eingesetzt. Beispiele sind arylsubstituierte Benzotriazolverbindungen (US-A-3 533 794), 4-Thiazolidonverbindungen (US-A-3 314 794 und 3 352 681), Benzophenonverbindungen (JP-A-2784/71), Zimtsäureesterverbindungen (US-A-3 705 805 und 3 707 375), Butadienverbindungen (US-A-4 045 229) oder Benzoxazolverbindungen (US-A-3 700 455).

Bestimmte Bindemittelschichten, insbesondere die vom Träger am weitesten entfernte Schicht, aber auch gelegentlich Zwischenschichten, insbesondere, wenn sie während der Herstellung die vom Träger am weitesten entfernte Schicht darstellen, können fotografisch inerte Teilchen anorganischer oder organischer Natur enthalten, z.B. als Mattierungsmittel oder als Abstandshalter (DE-A-33 31 542, DE-A-34 24 893, Research Disclosure 17 643, (Dez. 1978), Kapitel XVI).

Der mittlere Teilchendurchmesser der Abstandshalter liegt insbesondere im Bereich von 0,2 bis 10 $\mu$m. Die Abstandshalter sind wasserunlöslich und können alkaliunlöslich oder alkalilöslich sein, wobei die alkalilöslichen im allgemeinen im alkalischen Entwicklungsbad aus dem fotografischen Material entfernt werden. Beispiele für geeignete Polymere sind Polymethylmethacrylat, Copolymere aus Acrylsäure und Methylmethacrylat sowie Hydroxypropylmethylcellulosehexahydrophthalat.

Zusätze zur Verbesserung der Farbstoff-, Kuppler- und Weißenstabilität sowie zur Verringerung des Farbschleiers (Research Disclosure 17 643 (Dez. 1978), Kapitel VII) können den folgenden chemischen Stoffklassen angehören: Hydrochinone, 6-Hydroxychromane, 5-Hydroxycumarane, Spirochromane, Spiroindane, p-Alkoxyphenole, sterische gehinderte Phenole, Gallussäurederivate, Methylendioxybenzole, Aminophenole, sterisch gehinderte Amine, Derivate mit veresterten oder veråtherten phenolischen Hydroxylgruppen, Metallkomplexe.

Verbindungen, die sowohl eine sterisch gehinderte Amin-Partialstruktur als auch eine sterisch gehinderte Phenol-Partialstruktur in einem Molekül aufweisen (US-A-4 268 593), sind besonders wirksam zur Verhinderung der Beeinträchtigung von gelben Farbbildern als Folge der Entwicklung von Wärme, Feuchtigkeit und Licht. Um die Beeinträchtigung von purpurroten Farbbildern, insbesondere ihre Beeinträchtigung als Folge der Einwirkung von Licht, zu verhindern, sind Spiroindane (JP-A-159 644/81) und Chromane, die durch Hydrochinondiether oder -monoether substituiert sind (JP-A-89 835/80) besonders wirksam.

Die Schichten des fotografischen Materials können mit den üblichen Härtungsmitteln gehärtet werden. Geeignete Härtungsmittel sind z.B. Formaldehyd, Glutaraldehyd und ähnliche Aldehydverbindungen, Diacetyl, Cyclopentadion und ähnliche Ketonverbindungen, Bis-(2-chlorethylharnstoff), 2-Hydroxy-4,6-dichlor-1,3,5-triazin und andere Verbindungen, die reaktives Halogen enthalten (US-A-3 288 775, US-A-2 732 303, GB-A-974 723 und GB-A-1 167 207), Divinylsulfonverbindungen, 5-Acetyl-1,3-diacryloylhexahydro-1,3,5-triazin und andere Verbindungen, die eine reaktive Olefinbindung enthalten (US-A-3 635 718, US-A-3 232 763 und GB-A-994 869); N-Hydroxymethylphthalimid und andere N-Methylolverbindungen (US-A-2 732 316 und US-A-2 586 168); Isocyanate (US-A-3 103 437); Aziridinverbindungen (US-A-3 017 280 und US-A-2 983 611); Säurederivate (US-A-2 725 294 und US-A-2 725 295); Verbindungen vom Carbodiimidtyp (US-A-3 100 704); Carbamoylpyridiniumsalze (DE-A-22 25 230 und DE-A-24 39 551); Carbamoyloxypyridiniumverbindungen (DE-A-24 08 814); Verbindungen mit einer Phosphor-Halogen-Bindung (JP-A-113 929/83); N-Carbonyloximid-Verbindungen (JP-A-43353/81); N-Sulfonyloximido-Verbindungen (US-A-4 111 926), Dihydrochinolinverbindungen (US-A-4 013 468), 2-Sulfonyloxypyridiniumsalze (JP-A-110 762/81), Formamidiniumsalze (EP-A-0 162 308), Verbindungen mit zwei oder mehr N-Acyloximino-Gruppen (US-A-4 052 373), Epoxyverbindungen (US-A-3 091 537), Verbindungen vom Isoxazoltyp (US-A-3 321 313 und US-A-3 543 292); Halogencarboxyaldehyde, wie Mucochlorsäure; Dioxanderivate, wie Dihydroxydioxan und Di-chlordioxan; und anorganische Härter, wie Chromalaun und Zirkonsulfat.

Die Härtung kann in bekannter Weise dadurch bewirkt werden, daß das Härtungsmittel der Gießlösung für die zu härtende Schicht zugesetzt wird, oder dadurch, daß die zu härtende Schicht mit einer Schicht überschichtet wird, die ein diffusionsfähiges Härtungsmittel enthält.

Unter den aufgeführten Klassen gibt es langsam wirkende und schnell wirkende Härtungsmittel sowie sogenannte Soforthärter, die besonders vorteilhaft sind. Unter Soforthärtern werden Verbindungen verstanden, die geeignete Bindemittel so vernetzen, daß unmittelbar nach Beguß, spätestens nach 24 Stunden, vorzugsweise spätestens nach 8 Stunden die Härtung so weit abgeschlossen ist, daß keine weitere durch die Vernetzungsreaktion bedingte Änderung der Sensitometrie und der Quellung des Schichtverbandes auftritt. Unter Quellung wird die Differenz von Naßschichtdicke und Trockenschichtdicke bei der wäßrigen Verarbeitung des Films verstanden (Photogr. Sci., Eng. 8 (1964), 275; Photogr. Sci. Eng. (1972), 449).

Bei diesen mit Gelatine sehr schnell reagierenden Härtungsmitteln handelt es sich z.B. um Carbamoylpyridiniumsalze, die mit freien Carboxylgruppen der Gelatine zu reagieren vermögen, so daß letztere mit freien Aminogruppen der Gelatine unter Ausbildung von Peptidbindungen und Vernetzung der Gelatine reagieren.

Farbfotografische Negativmaterialien werden üblicherweise durch Entwickeln, Bleichen, Fixieren und Wässern oder durch Entwickeln, Bleichen, Fixieren und Stabilisieren ohne nachfolgende Wässerung verarbeitet, wobei Bleichen und Fixieren zu einem Verarbeitungsschritt zusammengefaßt sein können. Als Farbentwicklerverbindung lassen sich sämtliche Entwicklerverbindungen verwenden, die die Fähigkeit besitzen, in Form ihres Oxidationsproduktes mit Farbkupplern zu Azomethin- bzw. Indophenolfarbstoffen zu reagieren. Geeignete Farbentwicklerverbindungen sind aromatische, mindestens eine primäre Aminogruppe enthaltende Verbindungen vom p-Phenylendiamintyp, beispielsweise N,N-Dialkyl-p-phenylendiamine wie N,N-Diethyl-p-phenylendiamin, 1-(N-Ethyl-N-methansulfonamidoethyl)-3-methyl-p-phenylendiamin, 1-(N-Ethyl-N-hydroxyethyl)-3-methyl-p-phenylendiamin und 1-(N-Ethyl-N-methoxyethyl)-3-methyl-p-phenylendiamin. Weitere brauchbare Farbentwickler sind beispielsweise in J. Amer. Chem. Soc. 73, 3106 (1951) und G. Haist, Modern Photographic Processing, 1979, John Wiley and Sons, New York, Seite 545 ff. beschrieben.

Nach der Farbentwicklung kann ein saures Stoppbad oder eine Wässerung folgen.

Üblicherweise wird das Material unmittelbar nach der Farbentwicklung gebleicht und fixiert. Als Bleichmittel können z.B. Fe(III)-Salze und Fe(III)-Komplexsalze wie Ferricyanide, Dichromate, wasserlösliche Kobaltkomplexe verwendet werden. Besonders bevorzugt sind Eisen-(III)-Komplexe von Aminopolycarbonsäuren, insbesondere z.B. von Ethylendiamintetraessigsäure, Propylendiamintetraessigsäure, Diethylentriaminpentaessigsäure, Nitrilotriessigsäure, Iminodiessigsäure, N-Hydroxyethyl-ethylendiamintriessigsäure, Alkyliminodicarbonsäuren und von entsprechenden Phosphonsäuren. Geeignete als Bleichmittel sind weiterhin Persulfate und Peroxide, z.B. Wasserstoffperoxid.

Auf das Bleichfixierbad oder Fixierbad folgt meist eine Wässerung, die als Gegenstromwässerung ausgeführt ist oder aus mehreren Tanks mit eigener Wasserzufuhr besteht.

Günstige Ergebnisse können bei Verwendung eines darauf folgenden Schlußbades, das keinen oder nur wenig Formaldehyd enthält, erhalten werden.

Die Wässerung kann aber durch ein Stabilisierbad vollständig ersetzt werden, das üblicherweise im Gegenstrom geführt wird. Dieses Stabilisierbad übernimmt bei Formaldehydzusatz auch die Funktion eines Schlußbades.

Bei Farbumkehrmaterialien erfolgt zunächst eine Entwicklung mit einem Schwarz-Weiß-Entwickler, dessen Oxidationsprodukt nicht zur Reaktion mit den Farbkupplern befähigt ist. Es schließt sich eine diffuse Zweitbelichtung und dann Entwicklung mit einem Farbentwickler, Bleichen und Fixieren an.

Außer für Träger für Bildinformationsschichten kommt das erfindungsgemäße Polymergemisch auch für andere geformte Artikel in Betracht, beispielsweise für Fäden, Stäbe, Rohre und Flaschen.

Beispiele

Beispiel 1 (Vergleich)

Kommerziell erhältliches (Dicke 240 µm) PE-Papier wurde mit fotografischen Schichten begossen. Nach dem Aufbelichten eines fotografischen Testmusters ergaben sich die in der Tabelle angegebenen Werte.

Beispiel 2 (Vergleich)

Polyethylenterephthalat wurde mit 15 Gew.-%, bezogen auf Gesamtgewicht der eingesetzten Bestandteile, isotaktischem Polypropylen im Taumeltrockner gemischt und getrocknet.

Diese Mischung wurde in einem PET-Extruder aufgeschmolzen und durch einen Spalt extrudiert. Anschließend wurde die Folie längsverstreckt. Auf diese Folie wurde die Substratschicht aus einem Copolymer aus 88 Gew.-% Vinylidenchlorid, 10 Gew.-% Methacrylsäure und 2 Gew.-% Itaconsäure und 10 Gew.-%, bezogen auf Copolymer, kolloidales $SiO_2$ gegossen und die Folie anschließend querverstreckt. Beide Verstreckungen erfolgen bei 100 °C mit einem Verstreckungsfaktor von 3,3. Anschließend wurde die Folie 1 Minute bei 160 °C thermofixiert, abgekühlt und in üblicher Weise mit fotografischen Schichten versehen.

Die weitere Behandlung entsprach Beispiel 1.

Beispiel 3 (erfindungsgemäß)

Beispiel 2 wurde wiederholt mit der Änderung, daß Polypropylen durch die gleiche Menge SAN-Harz (Produkt C)) ersetzt und die Polymermischung bei 75 °C getrocknet wurde.

Beispiel 4 (erfindungsgemäß)

Beispiel 3 wurde wiederholt mit der Änderung, daß Polypropylen durch die gleiche Menge HIPS ersetzt wurde.

Beispiel 5 (erfindungsgemäß)

Beispiel 3 wurde wiederholt mit der Änderung, daß Polypropylen durch die gleiche Menge ABS 1 ersetzt wurde.

Beispiel 6 (erfindungsgemäß)

Beispiel 3 wurde wiederholt mit der Änderung, daß Polypropylen durch die gleiche Menge ABS 2 ersetzt wurde.

Beispiel 7 (erfindungsgemäß)

Beispiel 6 wurde wiederholt mit der Änderung, daß anstelle des Polyethylenterephthaltes die gleiche Menge einer Mischung aus 94 Gew.-% des gleichen Polyethylenterephthalates und 6 Gew.-% Polyethylen-iso-phthalat verwendet wurde.

Beispiel 8 (erfindungsgemäß)

Beispiel 7 wurde mit der Änderung wiederholt, daß die Menge an ABS-2 auf 20 Gew.-% erhöht wurde,

Beispiel 9 (erfindungsgemäß)

Beispiel 8 wurde mit der Änderung wiederholt, daß der Polymermischung 2,5 Gew.-%, bezogen auf Gesamtgewicht, Titandioxidpigment zugesetzt wurde.

Beispiel 10 (erfindungsgemäß)

Beispiel 9 wurde mit der Änderung wiederholt, daß die Titandioxidpigmentmenge auf 5 Gew.-% erhöht wurde.

Die folgenden Methoden wurden zur Bestimmung der Meßwerte verwendet.

Dicke der Folie

Messung mit Dickentaster an fünf verschiedenen Stellen der Folie und anschließender Mittelwertbildung.

Opazität (Optische Dichte)

Bestimmt wird die Transmissionsdichte $D_t$ = log 1/t in einem Mcbeth Transmissions-densitometer, Modell TD 404 hinter Blaufilter 94; Eichung auf den Wert 0,00 mit Zero Adjust, auf den Wert 2,00 mit Schott-Filter NG-2.

Knitterfestigkeit

Größe der Testprobenstücke: Breite x Länge 89 x 235 mm. Die Folie wird mit der Rückseite einmal mit der Krümmung, die durch den Testwalzendurchmesser vorgegeben ist, über die Testwalze abgezogen. Der Bereich der verwendeten Testwalzendurchmesser reicht hinunter bis 2 mm. Es wird der kleinste Durchmesser angegeben, bei dem noch keine Schäden auf der Oberfläche des Papiers mit bloßem Auge zu erkennen sind. Es wird visuell auf bleibende Schäden wie Kniffe, Halbmonde und Brücke geprüft.

Bildschärfe (KÜF)

Es wird die Kontrast-Übertragungs-Funktion gemessen. Beurteilungskriterium 8 Linien/mm für gelb/purpur/blaugrün.

Die Meßmethode ist beschrieben in T.H.James. The Theory of the Photographic Process, 4th, ed. Macmillan, New York, 1977, p. 596, 604-606. Aufbelichtet wird ein Rechteckraster. Die Auswertung erfolgt mit einem Reflexionsmikrodensitometer. Die Schärfe ist umso besser, je höher die Werte sind.

Naßhaftung - X-Test

Prüfung der Haftung des Schichtaufbaus auf der Substrierung, also an emulsionierter Unterlage. Schwarzblätter: Entwicklung CD92/40 °C/3'; danach kurz gewässert. Auf die Schichtseite der noch feuchten Probe wird mit einem spitzen Kunststoffstift ein X geritzt. Anschließend wird über die mit dem X markierte Stelle mit einem flachen Gummistopfen gerieben. Die Haftung ist umso besser, je weniger Ausrisse an der X-Markierung auftreten. Es werden nach einer Vergleichstafel Werte von 1 (sehr gut) bis 5 (schlecht) vergeben.

Tabelle

| Beispiele | | 1 | 2 | 3 | 4 | 5 | 6 | 7 | 8 | 9 | 10 |
|---|---|---|---|---|---|---|---|---|---|---|---|
| Dicke [µm] | | 240 | 195 | 203 | 205 | 192 | 201 | 203 | 197 | 196 | 202 |
| Opazität | | 2,4 | 1,6 | 1,8 | 2,0 | 2,1 | 2,0 | 2,1 | 2,2 | 2,6 | 3,0 |
| Knitterfestigkeit Ø in [mm] | | 2 | 10 | 8 | 9 | 3 | 3 | 3 | 3 | 3 | 3 |
| Optische Schärfe | gb | 36 | 23 | 25 | 27 | 26 | 27 | 28 | 25 | 29 | 33 |
| | pp | 44 | 31 | 34 | 36 | 35 | 36 | 37 | 34 | 38 | 42 |
| | bg | 35 | 25 | 27 | 28 | 27 | 25 | 26 | 26 | 29 | 30 |
| Naßhaftung | | 2 | 5 | 2 | 2 | 2 | 2 | 2 | 2 | 2 | 2 |

Kommerzielles PE-Papier zeigt bei relativ großer Dicke mittlere Opazität, gute Knitterfestigkeit, Schärfe und Naßhaftung. Durch Verwendung einer Polyester/Polypropylen-Mischung läßt sich zwar die Dicke

verringern, aber die Eigenschaften verschlechtern sich drastisch. Erst mit den erfindungsgemäßen Trägern werden bei gleichbleibend verringerter Dicke Eigenschaften erzielt, die an das PE-Papier heranreichen oder dieses sogar übertreffen (Beispiele 3 bis 10).

Die gegossenen fotografischen Schichten waren wie folgt zusammengesetzt:

Schichtaufbau 1:

1. Schicht (Substratschicht):
   0,2 g Gelatine
   0,07 g kolloidales $SiO_2$
2. Schicht (blauempfindliche Schicht):
   blauempfindliche Silberhalogenidemulsion (99,5 Mol-% Chlorid, 0,5 Mol-% Bromid, mittlerer Korndurchmesser 0,8 µm) aus 0,63 g $AgNO_3$ mit
   1,38 g Gelatine
   0,95 g Gelbkuppler
   0,29 g Trikresylphosphat (TKP)
3. Schicht (Schutzschicht)
   1,1 g Gelatine
   0,06 g 2,5-Dioctylhydrochinon
   0,06 g Dibutylphthalat (DBP)
4. Schicht (grünempfindliche Schicht)
   grünsensibilisierte Silberhalogenidemulsion (99,5 Mol-% Chlorid, 0,5 Mol-% Bromid, mittlerer Korndurchmesser 0,6 µm) aus 0,45 g $AgNO_3$ mit
   1,08 g Gelatine
   0,41 g Purpurkuppler
   0,34 g DBP
   0,04 g TKP
5. Schicht (UV-Schutzschicht)
   1,15 g Gelatine
   0,6 g UV-Absorber
   0,04 g TKP
6. Schicht (rotempfindliche Schicht)
   rotsensibilisierte Silberhalogenidemulsion (99,5 Mol-% Chlorid, 0,5 Mol-% Bromid, mittlerer Korndurchmesser 0,5 µm) aus 0,3 g $AgNO_3$ mit
   0,75 g Gelatine
   0,36 g Blaugrünkuppler
   0,36 g TKP
7. Schicht (UV-Schutzschicht)
   0,35 g Gelatine
   0,15 g UV-Absorber
   0,2 g TKP
8. Schicht (Schutzschicht)
   0,9 g Gelatine
   0,3 g Härtungsmittel H der folgenden Formel

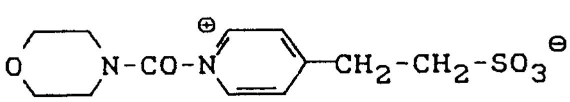

**Patentansprüche**

**1.** Geformter Artikel aus einem Polymergemisch aus 50 bis 97 Gew.-% eines linearen Polyesters und 3 bis 50 Gew.-% eines Styrol enthaltenden Polymers, wobei sich die Prozentanteile auf die Summe aus Polyester und Styrol enthaltendes Polymer beziehen.

**2.** Geformter Artikel gemäß Anspruch 1, dadurch gekennzeichnet, daß der geformte Artikel ein biaxialer verstreckter Träger für Bildinformationsschichten ist.

**3.** Geformter Artikel gemäß Anspruch 1, dadurch gekennzeichnet, daß der geformte Artikel ein fotografisches, biaxial verstrecktes Trägermaterial ist.

**4.** Fotografisches Trägermaterial nach Anspruch 3, dadurch gekennzeichnet, daß das Styrol enthaltende Polymer ein Pfropfcopolymerisat aus Acrylnitril, Butadien und Styrol (ABS) ist.

**5.** Geformter Artikel nach Anspruch 1, dadurch gekennzeichnet, daß der Polyester wenigstens 80 Gew.-% Polyethylenterephthalat enthält und bis zu 20 Gew`-% Polyethylenisophthalat enthalten kann.

**6.** Geformter Artikel nach Anspruch 1 aus 77 bis 88 Gew.-% des lineare Polyesters und 12 bis 23 Gew.-% des Styrol enthaltenden Polymers.

**7.** Träger nach Anspruch 2, dadurch gekennzeichnet, daß die Polyesterfolie in beide Richtungen auf das 2-bis 5-fache verstreckt ist.

**8.** Fotografisches Material mit einem Träger und wenigstens einer darauf aufgebrachten Silberhalogenidemulsionsschicht, dadurch gekennzeichnet, daß ein Träger gemäß einem der Ansprüche 2-6 verwendet wird.

**9.** Farbfotografisches Silberhalogenidmaterial mit einem Träger und mindestens je einer rotempfindlichen, grünempfindlichen und blauempfindlichen Silberhalogenidemulsionsschicht sowie gegebenenfalls Zwischenschichten und Schutzschichten, dadurch gekennzeichnet, daß ein Träger gemäß einem der Ansprüche 2 bis 6 verwendet wird.

**10.** Biaxial verstreckter Träger für Bildinformationsschichten nach Anspruch 2, der auf wenigstens einer Seite eine Schicht aus Polyester aufgebracht enthält, der kein styrolhaltiges Polymer enthält.